# EUROPEAN PATENT APPLICATION

(11) **EP 1 146 112 A1**
(43) Date of publication of application: **17.10.2001**
(21) Application number: 00870073.4
(22) Date of filing: 14.04.2000
(51) Int. Cl.: C11D 3/48, C11D 3/30, C11D 3/382, C11D 3/20, C11D 3/37, A01N 47/44, A01N 65/00

(54) **Process of cleaning and/or disinfecting a hard surface with a composition comprising a biguanide antimicrobial agent**

(71) Applicant: THE PROCTER & GAMBLE COMPANY, Cincinnati, Ohio 45202 (US)
(72) Inventor: Caselli, Alberto (NMN), 05100 Terni (IT); Raso, Floriana (NMN), 00166 Rome (IT)
(74) Representative: Morelle, Evelyne Charlotte Isabelle

(57) **Abstract**

The present invention relates to a of disinfecting and/or cleaning a hard-surface with a composition comprising a biguanide antimicrobial agent, an essential oil or an active thereof and an organic acid or a salt thereof whereby immediate and/or long lasting disinfecting benefits are provided.

## Description

### Technical field

The present invention relates to a process for cleaning and/or disinfecting various hard-surfaces like walls, tiles, table tops, glass, bathroom surfaces, kitchen surfaces as well as dishes.

### Background

Hard-surfaces, like walls, tiles, table tops, glass as well as dishes, are prone to soiling and/or to contamination with micro-organisms like bacteria, including Gram positive bacterial strains and Gram negative bacterial strains, viruses, and other more resistant micro-organisms like fungi. Hard-surfaces prone to soiling and contamination with micro-organisms can be found in various locations like : private households, for example, in kitchens and bathrooms; hospitals; restaurants; hotels; means of public transport; public bathes and pools; commercial and public laundries and the like.

Compositions for disinfecting and/or cleaning hard-surfaces are well known in the art. Indeed, disinfecting compositions based on known disinfecting materials like bleaches, quaternary ammonium compounds, essential oils or the like, provide acceptable disinfecting properties and on top of the disinfecting properties also provide a cleaning performance. For example, WO 97/25404 and WO 97/25106 describe disinfecting compositions based on essential oils and/or actives thereof in combination with hydrogen peroxide bleach.

However, it is well known that the overall disinfecting performance of the disinfecting compositions used to disinfect and/or clean hard-surfaces may still be further improved.

It is therefore an objective of the present invention to provide a process of disinfecting and/or cleaning a hard-surface with a composition that delivers good overall disinfecting performance. In particular, it is an objective of the present invention to provide a process of disinfecting and/or cleaning a hard-surface with a composition that delivers good disinfecting performance as well as good cleaning performance.

It has now been found that the above objectives can be met by a process of disinfecting and/or cleaning a hard-surface according to the present invention.

An advantage of the process as described herein is that said process provides an easy and fast way of disinfecting and/or cleaning a hard-surface.

A further advantage of the present process is that it not only provides effective immediate disinfection but also long lasting disinfection on hard-surfaces.

Another advantage of the present invention is that immediate and long lasting disinfection is provided on a broad range of bacterial strains including Gram positive bacterial strains, like *Staphylococcus aureus*, Gram negative bacterial strains, like *Pseudomonas aeruginosa*, viruses and more resistant micro-organisms like fungi.

It is yet another advantage of the invention to provide a process of disinfecting and/or cleaning a hard-surface with a composition that is safe to the hard-surfaces treated therewith.

### Background art

The following documents are representative of the prior art available in the field of disinfecting compositions used on various surfaces.

EP 0 252 278 describes liquid mucous membrane disinfectants based on alcohol and hydrogen peroxide containing one or more carboxylic acids, nitrogen-containing organic compounds from the group of specific oligohexamethyl biguanides, and optionally microbiocidically active phenolic compounds as well as water. However, EP 0 252 278 fails to disclose a process of treating a hard-surface or the use of the disinfectants described therein on hard-surfaces.

EP 0 226 081 describes liquid disinfectant preparations for use on hard-surfaces comprising specific oligohexamethyl biguanides, specific microbiocidically active phenolic compounds, and optionally builders.

Furthermore, EP 0 185 970, EP 0 099 209 and US 5,141,803 describe compositions for use on hard-surfaces comprising biguanide antimicrobial agents.

### Summary of the Invention

The present invention encompasses a process of disinfecting and/or cleaning hard-surfaces with a composition comprising a biguanide antimicrobial agent, an essential oil or an active thereof and an organic acid or a salt thereof.

In a preferred embodiment, said biguanide antimicrobial agent is poly (hexamethylene biguanide) hydrochloride and/or 1,1'-hexamethylene-bis-[5-(p-chlorphenyl)-biguanide].

In another preferred embodiment said composition is a liquid, preferably liquid aqueous, composition preferably having a pH of from 4-12.

In another preferred embodiment said essential oil or active thereof is selected from the group consisting of Thymol, Geraniol, cinnamon oil, or an active thereof, and mixtures thereof.

### Detailed description of the invention

### Process of disinfecting and/or cleaning a hard-surface

The present invention encompasses a process of disinfecting and/or cleaning a hard-surface with a composition, as defined herein, said process preferably comprising the step of applying said composition onto said surface.

The hard-surfaces to treat with the compositions herein are those typically found in houses like kitchens, bathrooms, e.g., tiles, walls, floors, chrome, glass, smooth vinyl, any plastic, plastified wood, table top, sinks, cooker tops, dishes, sanitary fittings such as sinks, showers, shower curtains, wash basins, WCs and the like. Hard-surfaces also include household appliances including, but not limited to, refrigerators, freezers, washing machines, automatic dryers, ovens, microwave ovens, dishwashers and so on. Furthermore, hard-surfaces found in hospitals, restaurants, hotels, public transport, public bathes and pools, commercial and public laundries and the like are included herein.

In such a process a composition, as described herein, needs to be contacted with the hard-surfaces to be disinfected/cleaned. Thus, the present invention also encompasses a process of disinfecting/cleaning a hard-surface with a composition as described herein, wherein said process comprises the step of applying said composition to said hard-surface, preferably only infected portions thereof and optionally rinsing said hard-surface.

In the process of disinfecting hard-surfaces according to the present invention the compositions as described herein may be in liquid form and may be applied to the surface to be disinfected in their neat form or in their diluted form typically at a dilution level up to 100 times their weight of a suitable solvent, preferably water, preferably into 80 to 2 times their weight of a suitable solvent, preferably water, and more preferably 60 to 10 times their weight of a suitable solvent, preferably water.

In a preferred embodiment wherein the composition herein is incorporated onto a wipe, the process of disinfecting and/or cleaning a hard-surface comprises the steps of contacting said wipe incorporation a composition as described herein with said hard-surface and preferably wiping said hard-surface with said wipe.

### The composition

The compositions of the present invention are preferably formulated as liquid compositions. Preferred compositions herein are aqueous compositions and therefore, preferably comprise water, more preferably in an amount of from 60% to 98%, even more preferably of from 80% to 97% and most preferably 85% to 97% by weight of the total composition.

The pH of the liquid compositions according to the present invention may typically be from 1 to 14. Preferably, the compositions according to the present invention have a pH from 4 to 14. More preferably, the pH of the liquid compositions herein, as is measured at 25°C, is at least, with increasing preference in the order given, 4.5, 5.0, 5.5, 6.0, 6.5, 7.0, 7.5, 8.0, 8.5, 9.0, 9.25, 9.5 or 9.75. Independently, the pH of the liquid compositions herein, as is measured at 25°C, preferably is no more than, with increasing preference in the order given, 13.0, 13.5, 12.5, 12.0, 11.5, 11.0, 10.75, 10.5, 10.25 or 10. Accordingly, the compositions herein may further comprise an acid or alkaline material and/or a buffering system to adjust and maintain pH as appropriate.

In a preferred embodiment wherein the compositions herein comprise a peroxygen bleach, the pH of the liquid compositions, as is measured at 25°C, is typically at least, with increasing preference in the order given, 0.1, 0.5, 1, 1.5, 2, 2.5, 3, 3.5, 4 or 4.5. Independently, the pH of said preferred liquid compositions comprising a peroxygen bleach as described herein, as is measured at 25°C, preferably is typically no more than, with increasing preference in the order given, 10, 9.5, 9, 8.5, 8, 7.5, 7, 6.5, 6 or 5.5. These preferred pH ranges contribute to the stability of hydrogen peroxide, when present.

Preferred acids herein to adjust the pH are organic or inorganic acids or mixtures thereof, these acids may be added on top of the organic acids and slats thereof as described herein below. Preferred organic acids are acetic acid, lactic acid or citric acid or a mixture thereof. Preferred inorganic acids are sulfuric acid or phosphoric acid or a mixture thereof. A particularly preferred acid to be used herein is an inorganic acid and most preferred is sulfuric acid.

Typical levels of such acids, when present, are of from 0.01% to 1.0%, preferably from 0.05% to 0.8%, and more preferably from 0.1% to 0.5% by weight of the total composition.

The alkaline material to be used herein to adjust the pH can be organic or inorganic bases. Suitable bases for use herein are the caustic alkalis, such as sodium hydroxide, potassium hydroxide and/or lithium hydroxide, and/or the alkali metal oxides such, as sodium and/or potassium oxide or mixtures thereof. A preferred base is a caustic alkali, more preferably sodium hydroxide and/or potassium hydroxide.

Other suitable bases include ammonia, ammonium carbonate and hydrogen carbonate.

Typical levels of such bases, when present, are of from 0.01% to 1.0%, preferably from 0.05% to 0.8%, and more preferably from 0.1% to 0.5% by weight of the total composition.

### Biguanide antimicrobial agent

As an essential ingredient the compositions according to the present invention comprise a biguanide antimicrobial agent. Any biguanide antimicrobial agent known to those skilled in the art may be used herein.

Suitable biguanide antimicrobial agents are characterised in comprising at least one, preferably 2 or more, biguanide moieties according to the following formula:

-NH-C(=NH)-NH-C(=NH)-NH-

Suitable and preferred biguanide antimicrobial agents are oligo- or poly alkylene biguanides or salts thereof or mixtures thereof. More preferred biguanide antimicrobial agents are oligo- or poly hexamethylene biguanides or salts thereof or mixtures thereof.

Examples of suitable biguanide antimicrobial agent are describe in EP 0 024 031, US 2,684,924, US 2,990,425, US 3,468,898, US 4,022,834, DE-OS- 22 12 259 and DE-OS- 26 27 548. Particularly suitable biguanide antimicrobial agents are selected from the group consisting of poly (hexamethylene biguanide) hydrochloride, 1,2-Bis-(N⁵-p-chlorphenyl-N¹-biguanide)-ethane, 1,2-Bis-(N⁵-p-nitrophenyl-N¹-biguanide)-ethane, 1,2-Bis-(N⁵-p-hydroxyphenyl-N¹-biguanide)-ethane, 1,2-Bis-(N⁵-p-chlorbenzyl-N¹-biguanide)-ethane, 1,2-Bis-(N⁵-p-bromphenyl-N⁵-hexyl-N¹-biguanide)-ethane, 1,2-Bis-(N⁵-p-chlorphenyl-N⁵-2-ethylphenyl-N¹-biguanide)-ethane, 1,2-Bis-(N⁵-p-chlorphenyl-N¹-ethyl-N¹-biguanide)-ethane, 1,2-Bis-(N⁵-p-methoxyphenyl-N¹-biguanide)-ethane, 1,2-Bis-(N⁵-p-methylphenyl-N¹-biguanide)-ethane, 1,2-Bis-(N⁵-3,5-dimethylphenyl-N¹-biguanide)-ethane, 1,2-Bis-(N⁵-2,6-dichlorphenyl-N¹-biguanide)-ethane, 1,2-Bis-(N⁵-2,6-dimethylphenyl-N¹-biguanide)-ethane, 1,4-Bis-(N⁵-p-chlorphenyl-N¹-biguanide)-butane, Bis-(N⁵-p-chlorphenyl-N¹-biguanide)-methane, 1,3-Bis-(N⁵-p-chlorphenyl-N¹-biguanide)-propane and 1,1'-hexamethylene-bis-[5-(4-chlorphenyl)-biguanide] and salts thereof, and mixtures thereof.

In a preferred embodiment according to the present invention said biguanide antimicrobial agents is a poly hexamethylene biguanide or salt thereof according to the following formula :

-[-(CH₂)₃-NH-C(=NH)-NH-C(=NH)-NH-(CH₂)₃-]ₙ-

wherein n is an integer selected from 1 to 50, preferably 1 to 20, more preferably 12. More preferably said biguanide antimicrobial agents is a salt of a poly hexamethylene biguanide according to the following formula :

-[-(CH₂)₃-NH-C(=NH)-NH-C(=NH)-NH-(CH₂)₃-]ₙ-.nHX

wherein n is an integer selected from 1 to 50, preferably 1 to 20, more preferably 12, and HX is salt component, preferably HCI.

A suitable poly hexamethylene biguanide or salt thereof is poly (hexamethylene biguanide) hydrochloride (PBG) wherein in the above formula n=12, commercially available under the trade name Vantocil IB® or Cosmocil CQ® from Avecia.

In another preferred embodiment according to the present invention said biguanide antimicrobial agents is 1,1'-hexamethylene-bis-[5-(p-chlorphenyl)-biguanide], commercially available under the trade name Chlrohexidine®.

Preferred biguanide antimicrobial agents according to the present invention are poly (hexamethylene biguanide) hydrochloride, preferably having a polymerization degree of 12, 1,1'-hexamethylene-bis-[5-(p-chlorphenyl)-biguanide] and mixtures thereof. A more preferred biguanide antimicrobial agents according to the present invention is poly (hexamethylene biguanide) hydrochloride, preferably having a polymerization degree of 12.

Typically the composition herein may comprise up to 20%, preferably from 0.01% to 20%, more preferably from 0.01% to 10%, even more preferably from 0.01% to 5%, by weight of the total composition of a biguanide antimicrobial agent.

### Essential oil or active thereof

As a second essential ingredient the compositions according to the present invention comprise an essential oil or an active thereof or a mixture thereof. Any essential oil or active thereof known to those skilled in the art to exhibit an antimicrobial activity may be used herein.

By "actives of essential oils", it is meant herein any ingredient of essential oils that exhibits antimicrobial activity.

It is speculated that said antimicrobial essential oils and actives thereof act as proteins denaturing agents. Also said antimicrobial-active essential oils and actives thereof are compounds which contribute to the safety profile of the compositions according to the present invention when used to disinfect any surface. A further advantage of said antimicrobial oils and actives thereof is that they impart pleasant odor to a composition comprising them without the need of adding a perfume.

Such essential oils include, but are not limited to, those obtained from thyme, lemongrass, citrus, lemons, oranges, anise, clove, aniseed, cinnamon, geranium, roses, mint, lavender, citronella, eucalyptus, peppermint, camphor, sandalwood, pine, vervain, rosmarin, fleagrass, ratanhiae and cedar and mixtures thereof.

A preferred essential oil herein is cinnamon oil.

Actives of essential oils for use herein include, but are not limited to, thymol (present for example in thyme), eugenol (present for example in clove), menthol (present for example in mint), geraniol (present for example in geranium and rose), verbenone (present for example in vervain), eucalyptol and pinocarvone (present in eucalyptus), cedrol (present for example in cedar), anethol (present for example in anise), cinnamic acid, cinnamyl aldehyde and cinnamyl alcohol (present in cinnamon), carvacrol, hinokitiol, berberine, ferulic acid, methyl salicylic acid, methyl salicylate, terpineol and mixtures thereof.

Preferred actives of essential oils to be used herein are thymol, eugenol, verbenone, eucalyptol, terpineol, cinnamic acid, cinnamyl aldehyde, cinnamyl alcohol, methyl salicylic acid and/or geraniol. More preferred actives of essential oils to be used herein are selected from the group consisting of thymol, eugenol, geraniol, cinnamic acid, cinnamyl aldehyde and cinnamyl alcohol and mixtures thereof. Even more actives of essential oils to be used herein are selected from the group consisting of cinnamic acid, cinnamyl aldehyde and cinnamyl alcohol and mixtures thereof.

Thymol is commercially available for example from Aldrich, eugenol is commercially available for example from Sigma, Systems - Bioindustries (SBI) - Manheimer Inc., cinnamic acid is commercially available for example from Aldrich and cinnamyl aldehyde is commercially available for example from Aldrich.

Typically, the antimicrobial essential oil or active thereof or mixture thereof is present in the composition at a level up to 20%, preferably from 0.001% to 10%, more preferably from 0.006% to 10%, even more preferably from 0.006% to 8% and most preferably from 0.006% to 3%, by weight of the total composition.

### Organic acid or a salt thereof

As a third essential ingredient the compositions according to the present invention comprise an organic acid or a salt thereof. Any organic acid or salt thereof known to those skilled in the art may be used herein.

Suitable organic acids or salts thereof are selected from the group consisting of mono- and poly-carboxylic acids, percarboxylic acids and substituted carboxylic acids, and salts thereof, and mixtures thereof.

Suitable mono- and poly-carboxylic acids or salts thereof are selected from the group consisting of citric acid, lactic acid, ascorbic acid, isoascorbic acid, tartaric acid, formic acid, maleic acid, malic acid, malonic acid, propionic acid, acetic acid, dehydroacetic acid, benzoic acid, hydroxy benzoic acid, and salts thereof, and mixtures thereof.

Suitable percarboxylic acids or salts thereof are selected from the group consisting of peracetic acid, percarbonic acid, perboric acid, and salts thereof, and mixtures thereof.

Suitable substituted carboxylic acids or salts thereof are selected from the group consisting of aminoacids, halogenated carboxylic acids, and salts thereof, and mixtures thereof.

Preferred organic acids or salts thereof for use herein are selected from the group consisting of lactic acid, citric acid, and ascorbic acid and salts thereof and mixtures thereof. More preferred organic acids for use herein are selected from the group consisting of lactic acid and citric acid and salts thereof and mixtures thereof. An even more preferred organic acids for use herein is lactic acid or a salt thereof.

Suitable organic acids or salts thereof are commercially available from JBL, T&L, or Sigma. Lactic acid is commercially available from Sigma and Purac.

Typically the composition herein may comprise up to 20%, preferably from 0.1% to 10%, more preferably from 0.1% to 5%, even more preferably from 0.1% to 3%, by weight of the total composition of an organic acid or a salt thereof.

The present invention is based on the finding that the combination of a biguanide antimicrobial agent, an essential oil or an active thereof and an organic acid or a salt thereof in a composition used to treat a hard-surface results in an excellent immediate disinfecting performance and provides long lasting disinfecting benefits to said surface.

It is well known in the art that each of the three essential ingredients (i.e., the biguanide antimicrobial agent, the essential oil or active thereof and the organic acid) of the compositions according to the present invention have an anti-microbial activity on its own. The Applicant has now surprisingly found that the combination of the three essential ingredients results in an immediate and long lasting disinfecting performance or anti-microbial activity that is significantly higher than the immediate and long lasting disinfecting performance or anti-microbial activity that would be expected from the combination of the three ingredients (cumulative effect). It has been found that the three ingredient show a synergistic effect when combined to disinfect a hard-surface. Indeed, it has been found that the three essential ingredients in the compositions used in the process according to the present invention interact in a way to provide a significant increase in immediate and long lasting disinfecting performance or anti-microbial activity, even at very low actives level.

Advantageously, the immediate and long lasting disinfection benefits are obtained with the compositions of the present invention even when used under highly diluted conditions, i.e., up to dilution levels of from 1:100 (composition:water).

Furthermore, it has been observed by the Applicant that the compositions according to the present invention not only provide immediate and long lasting disinfecting benefits but also provide cleaning benefits when used to disinfect and/or clean hard-surfaces.

Effective immediate and long lasting disinfecting performance is obtained with the compositions according to the present inventions on a variety of micro-organisms including : Gram negative bacteria like *Pseudomonas aeroginosa*, *Escherichia coli, Salmonella*; Gram positive bacteria like *Enterococcus hirae, Staphylococcus aureus*; viruses; and more resistant micro-organisms like fungi; present on infected surfaces.

### Immediate disinfecting test method

The immediate disinfecting properties of a composition according to the present invention may be measured by the bactericidal activity of said composition. Test methods suitable to evaluate the bactericidal activity of a composition on infected surfaces are described in European Standard, EN 1040, EN 1276, dated September 1997 issued by the European committee for standardization, Brussels. European Standards EN 1040 and EN 1276 specify test methods and requirements for the minimum bactericidal activity of a disinfecting composition. The tests are passed if the bacterial colonies forming units (cfu) are reduced from a 10⁷ cfu (initial level) to a 10² cfu (final level after contact with the disinfecting product), i.e., a 10⁵ reduction of the viability is necessary. Other suitable methods are the AOAC Use-dilution method, AOAC Germicidal Spray method, AOAC Wipes method (US) and AFNOR T72-190 (Europe). The AFNOR method NF T72-190 (France, Europe) is described in the French Standard and was issued in August 1988.

### Long lasting disinfecting test method

Long lasting disinfection properties of the compositions herein may be measured by the bactericidal activity of said compositions. A test method suitable to evaluate the long lasting bactericidal activity of a composition may be as follow: First, the surfaces (e.g., glass) to be tested are respectively treated with either a composition according to the present invention or a reference composition, e.g., a negative control composed of pure water (for example by spraying the composition directly on the surface or first spraying the composition on a sponge used to clean the surface or when the composition herein is executed in the form of wipe by wiping the surface therewith). After a variable time frame (e.g. 24 hours) each surface is respectively inoculated with bacteria (10⁵⁻⁷cfu/slide) cultured in for example TSB (Tryptone Soya Broth) and left typically from a few seconds to 2 hours before evaluating the remaining living bacteria. Then living bacteria (if any) are recovered from the surface (by re-suspending the bacteria into the neutralization broth and plating them on agar) and incubated at appropriate temperature, e.g., 37°C to let them grow typically over night. Finally, an evaluation of the residual antibacterial efficacy of the composition is made by comparing side by side the cultures and/or dilutions thereof (e.g. 10⁻² or 10⁻¹) resulting from the surfaces treated with the compositions according to the present invention and the reference composition.

### Cleaning test method

Standard enamel plates are soiled by applying on them a grease/particulate matter and then baking them. The tested compositions are applied on a sponge that is placed onto a Gardner Machine. The Gardner machine measures the number of strokes needed to reach 95-99% clean plates. The performance is measured as such (i.e., undiluted) and upon dilution at 1.5% in water.

### Optional ingredients

### Surfactants

The compositions according to the present invention may further comprise a surfactant or mixtures thereof. Suitable surfactants to be used herein may be any surfactant known to those skilled in the art including anionic, nonionic, cationic, amphoteric and/or zwitterionic surfactants. Surfactants contribute to the cleaning performance of the disinfecting compositions of the present invention.

Particularly suitable anionic surfactants to be used herein include water soluble salts or acids of the formula ROSO₃M wherein R is preferably a C₆-C₂₄ hydrocarbyl, preferably an alkyl or hydroxyalkyl having a C₁₀-C₂₀ alkyl component, more preferably a C₁₂-C₁₈ alkyl or hydroxyalkyl, and M is H or a cation, e.g., an alkali metal cation (e.g., sodium, potassium, lithium), or ammonium or substituted ammonium (e.g., methyl-, dimethyl-, and trimethyl ammonium cations and quaternary ammonium cations, such as tetramethylammonium and dimethyl piperdinium cations and quaternary ammonium cations derived from alkylamines such as ethylamine, diethylamine, triethylamine, and mixtures thereof, and the like).

Other suitable anionic surfactants to be used herein include alkyl-diphenylether-sulphonates and alkyl-carboxylates. Other anionic surfactants can include salts (including, for example, sodium, potassium, ammonium, and substituted ammonium salts such as mono-, di- and triethanolamine salts) of soap, C₉-C₂₀ linear alkylbenzenesulfonates, C₈-C₂₂ primary or secondary alkanesulfonates, C₈-C₂₄ olefinsulfonates, sulfonated polycarboxylic acids prepared by sulfonation of the pyrolyzed product of alkaline earth metal citrates, e.g., as described in British patent specification No. 1,082,179, C₈-C₂₄ alkylpolyglycolethersulfates (containing up to 10 moles of ethylene oxide); alkyl ester sulfonates such as C₁₄₋₁₆ methyl ester sulfonates; acyl glycerol sulfonates, fatty oleyl glycerol sulfates, alkyl phenol ethylene oxide ether sulfates, paraffin sulfonates, alkyl phosphates, isethionates such as the acyl isethionates, N-acyl taurates, alkyl succinamates and sulfosuccinates, monoesters of sulfosuccinate (especially saturated and unsaturated C₁₂-C₁₈ monoesters) diesters of sulfosuccinate (especially saturated and unsaturated C₆-C₁₄ diesters), acyl sarcosinates, sulfates of alkylpolysaccharides such as the sulfates of alkylpolyglucoside (the nonionic nonsulfated compounds being described below), branched primary alkyl sulfates, alkyl polyethoxy carboxylates such as those of the formula RO(CH₂CH₂O)ₖCH₂COO-M⁺ wherein R is a C₈-C₂₂ alkyl, k is an integer from 0 to 10, and M is a soluble salt-forming cation. Resin acids and hydrogenated resin acids are also suitable, such as rosin, hydrogenated rosin, and resin acids and hydrogenated resin acids present in or derived from tall oil. Further examples are given in "Surface Active Agents and Detergents" (Vol. I and II by Schwartz, Perry and Berch). A variety of such surfactants are also generally disclosed in U.S. Patent 3,929,678, issued December 30, 1975 to Laughlin, et al. at Column 23, line 58 through Column 29, line 23 (herein incorporated by reference).

Preferred anionic surfactants for use in the compositions herein are the alkyl benzene sulfonates, alkyl sulfates, alkyl alkoxylated sulfates, paraffin sulfonates and mixtures thereof.

Suitable amphoteric surfactants to be used herein include amine oxides having the following formula R₁R₂R₃NO wherein each of R₁, R₂ and R₃ is independently a saturated substituted or unsubstituted, linear or branched hydrocarbon chains of from 1 to 30 carbon atoms. Preferred amine oxide surfactants to be used according to the present invention are amine oxides having the following formula R₁R₂R₃NO wherein R₁ is an hydrocarbon chain comprising from 1 to 30 carbon atoms, preferably from 6 to 20, more preferably from 8 to 16, most preferably from 8 to 12, and wherein R₂ and R₃ are independently substituted or unsubstituted, linear or branched hydrocarbon chains comprising from 1 to 4 carbon atoms, preferably from 1 to 3 carbon atoms, and more preferably are methyl groups. R₁ may be a saturated substituted or unsubstituted, linear or branched hydrocarbon chain.

Suitable amine oxides for use herein are for instance natural blend C₈-C₁₀ amine oxides as well as C₁₂-C₁₆ amine oxides commercially available from Hoechst.

Suitable zwitterionic surfactants to be used herein contain both cationic and anionic hydrophilic groups on the same molecule at a relatively wide range of pH's. The typical cationic group is a quaternary ammonium group, although other positively charged groups like phosphonium, imidazolium and sulfonium groups can be used. The typical anionic hydrophilic groups are carboxylates and sulfonates, although other groups like sulfates, phosphonates, and the like can be used. A generic formula for some zwitterionic surfactants to be used herein is

R₁-N⁺(R₂)(R₃)R₄X⁻

wherein R₁ is a hydrophobic group; R₂ and R₃ are each C₁-C₄ alkyl, hydroxy alkyl or other substituted alkyl group which can also be joined to form ring structures with the N; R₄ is a moiety joining the cationic nitrogen atom to the hydrophilic group and is typically an alkylene, hydroxy alkylene, or polyalkoxy group containing from 1 to 10 carbon atoms; and X is the hydrophilic group which is preferably a carboxylate or sulfonate group. Preferred hydrophobic groups R₁ are alkyl groups containing from 1 to 24, preferably less than 18, more preferably less than 16 carbon atoms. The hydrophobic group can be unsaturated and/or contain substituents and/or linking groups such as aryl groups, amido groups, ester groups and the like. In general, the simple alkyl groups are preferred for cost and stability reasons.

Highly preferred zwitterionic surfactants include betaine and sulphobetaine surfactants, derivatives thereof or mixtures thereof. Said betaine or sulphobetaine surfactants are preferred herein as, they help disinfection by increasing the permeability of the bacterial cell wall, thus allowing other active ingredients to enter the cell.

Furthermore, due to the mild action profile of said betaine or sulphobetaine surfactants, they are particularly suitable for the cleaning of delicate surfaces, e.g., surfaces in contact with food and/or babies. Betaine and sulphobetaine surfactants are also extremely mild to the skin and/or surfaces to be treated.

Suitable betaine and sulphobetaine surfactants to be used herein are the betaine/sulphobetaine and betaine-like detergents wherein the molecule contains both basic and acidic groups which form an inner salt giving the molecule both cationic and anionic hydrophilic groups over a broad range of pH values. Some common examples of these detergents are described in U.S. Pat. Nos. 2,082,275, 2,702,279 and 2,255,082, incorporated herein by reference. Preferred betaine and sulphobetaine surfactants herein are according to the formula : 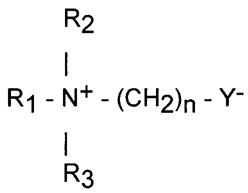 wherein R₁ is a hydrocarbon chain containing from 1 to 24 carbon atoms, preferably from 8 to 18, more preferably from 12 to 14, wherein R₂ and R₃ are hydrocarbon chains containing from 1 to 3 carbon atoms, preferably 1 carbon atom, wherein n is an integer from 1 to 10, preferably from 1 to 6, more preferably is 1, Y is selected from the group consisting of carboxyl and sulfonyl radicals and wherein the sum of R₁, R₂ and R₃ hydrocarbon chains is from 14 to 24 carbon atoms, or mixtures thereof.

Examples of particularly suitable betaine surfactants include C₁₂-C₁₈ alkyl dimethyl betaine such as coconut-betaine and C₁₀-C₁₆ alkyl dimethyl betaine such as lauryl-betaine. Coconut-betaine is commercially available from Seppic under the trade name of Amonyl 265®. Lauryl-betaine is commercially available from Albright & Wilson under the trade name Empigen BB/L®.

Other specific zwitterionic surfactants have the generic formulas:

R₁-C(O)-N(R₂)-(C(R₃)₂)ₙ-N(R₂)₂⁽⁺⁾-(C(R₃)₂)ₙ-SO₃⁽⁻⁾

or

R₁-C(O)-N(R₂)-(C(R₃)₂)ₙ-N(R₂)₂⁽⁺⁾-(C(R₃)₂)ₙ-COO⁽⁻⁾

wherein each R₁ is a hydrocarbon, e.g. an alkyl group containing from 8 up to 20, preferably up to 18, more preferably up to 16 carbon atoms, each R₂ is either a hydrogen (when attached to the amido nitrogen), short chain alkyl or substituted alkyl containing from one to 4 carbon atoms, preferably groups selected from the group consisting of methyl, ethyl, propyl, hydroxy substituted ethyl or propyl and mixtures thereof, preferably methyl, each R₃ is selected from the group consisting of hydrogen and hydroxy groups and each n is a number from 1 to 4, preferably from 2 to 3, more preferably 3, with no more than one hydroxy group in any (C(R₃)₂) moiety. The R₁ groups can be branched and/or unsaturated. The R₂ groups can also be connected to form ring structures. A surfactant of this type is a C₁₀-C₁₄ fatty acylamidopropylene(hydroxypropylene)sulfobetaine that is available from the Sherex Company under the trade name "Varion CAS sulfobetaine"®.

Suitable nonionic surfactants to be used herein are fatty alcohol ethoxylates and/or propoxylates which are commercially available with a variety of fatty alcohol chain lengths and a variety of ethoxylation degrees. Indeed, the HLB values of such alkoxylated nonionic surfactants depend essentially on the chain length of the fatty alcohol, the nature of the alkoxylation and the degree of alkoxylation. Surfactant catalogues are available which list a number of surfactants, including nonionics, together with their respective HLB values.

Particularly suitable for use herein as nonionic surfactants are hydrophobic nonionic surfactants having an HLB (hydrophilic-lipophilic balance) below 16, preferably below 15, more preferably below 12, and most preferably below 10. Those hydrophobic nonionic surfactants have been found to provide good grease cutting properties.

Preferred hydrophobic nonionic surfactants to be used in the compositions according to the present invention are surfactants having an HLB below 16 and being according to the formula RO-(C₂H₄O)ₙ(C₃H₆O)ₘH, wherein R is a C₆ to C₂₂ alkyl chain or a C₆ to C₂₈ alkyl benzene chain, and wherein n+m is from 0 to 20 and n is from 0 to 15 and m is from 0 to 20, preferably n+m is from 1 to 15 and, n and m are from 0.5 to 15, more preferably n+m is from 1 to 10 and, n and m are from 0 to 10. The preferred R chains for use herein are the C₈ to C₂₂ alkyl chains. Accordingly, suitable hydrophobic nonionic surfactants for use herein are Dobanol ^{R} 91-2.5 (HLB = 8.1; R is a mixture of C9 and C₁₁ alkyl chains, n is 2.5 and m is 0), or Lutensol ^{R} TO3 (HLB = 8; R is a C₁₃ alkyl chains, n is 3 and m is 0), or Lutensol ^{R} AO3 (HLB = 8; R is a mixture of C₁₃ and C₁₅ alkyl chains, n is 3 and m is 0), or Tergitol ^{R} 25L3 (HLB = 7.7; R is in the range of C₁₂ to C₁₅ alkyl chain length, n is 3 and m is 0), or Dobanol ^{R} 23-3 (HLB = 8.1; R is a mixture of C₁₂ and C₁₃ alkyl chains, n is 3 and m is 0), or Dobanol ^{R} 23-2 (HLB = 6.2; R is a mixture of C₁₂ and C₁₃ alkyl chains, n is 2 and m is 0), or Dobanol ^{R} 45-7 (HLB = 11.6; R is a mixture of C₁₄ and C₁₅ alkyl chains, n is 7 and m is 0) Dobanol ^{R} 23-6.5 (HLB = 11.9; R is a mixture of C₁₂ and C₁₃ alkyl chains, n is 6.5 and m is 0), or Dobanol ^{R} 25-7 (HLB = 12; R is a mixture of C₁₂ and C₁₅ alkyl chains, n is 7 and m is 0), or Dobanol ^{R} 91-5 (HLB = 11.6; R is a mixture of C₉ and C₁₁ alkyl chains, n is 5 and m is 0), or Dobanol ^{R} 91-6 (HLB = 12.5 ; R is a mixture of C₉ and C₁₁ alkyl chains, n is 6 and m is 0), or Dobanol ^{R} 91-8 (HLB = 13.7 ; R is a mixture of C₉ and C₁₁ alkyl chains, n is 8 and m is 0), Dobanol ^{R} 91-10 (HLB = 14.2 ; R is a mixture of C₉ to C₁₁ alkyl chains, n is 10 and m is 0), or mixtures thereof. Preferred herein are Dobanol ^{R} 91-2.5 , or Lutensol ^{R} TO3, or Lutensol ^{R} AO3, or Tergitol ^{R} 25L3, or Dobanol ^{R} 23-3, or Dobanol ^{R} 23-2, or mixtures thereof. These Dobanol^{R} surfactants are commercially available from SHELL. These Lutensol^{R} surfactants are commercially available from BASF and these Tergitol ^{R} surfactants are commercially available from UNION CARBIDE.

Typically, the surfactant or mixtures thereof may be present in the composition of the present invention at a level of from 0.01% to 50% by weight of the total composition, preferably from 0.01% to 30% and more preferably from 0.05% to 20%.

### Chelating agents

The compositions herein may further comprise a chelating agent as a preferred optional ingredient. Suitable chelating agents may be any of those known to those skilled in the art such as the ones selected from the group comprising phosphonate chelating agents, amino carboxylate chelating agents or other carboxylate chelating agents, or polyfunctionally-substituted aromatic chelating agents or mixtures thereof.

Such phosphonate chelating agents may include etidronic acid (1-hydroxyethylidene-bisphosphonic acid or HEDP) as well as amino phosphonate compounds, including amino alkylene poly (alkylene phosphonate), alkali metal ethane 1-hydroxy diphosphonates, nitrilo trimethylene phosphonates, ethylene diamine tetra methylene phosphonates, and diethylene triamine penta methylene phosphonates. The phosphonate compounds may be present either in their acid form or as salts of different cations on some or all of their acid functionalities. Preferred phosphonate chelating agents to be used herein are diethylene triamine penta methylene phosphonates. Such phosphonate chelants are commercially available from Monsanto under the trade name DEQUEST® .

Polyfunctionally-substituted aromatic chelating agents may also be useful in the compositions herein. See U.S. patent 3,812,044, issued May 21, 1974, to Connor et al. Preferred compounds of this type in acid form are dihydroxydisulfobenzenes such as 1,2-dihydroxy -3,5-disulfobenzene.

A preferred biodegradable chelating agent for use herein is ethylene diamine N,N'- disuccinic acid, or alkali metal, or alkaline earth, ammonium or substitutes ammonium salts thereof or mixtures thereof. Ethylenediamine N,N'- disuccinic acids, especially the (S,S) isomer have been extensively described in US patent 4, 704, 233, November 3, 1987 to Hartman and Perkins. Ethylenediamine N,N'- disuccinic acid is, for instance, commercially available under the tradename ssEDDS® from Palmer Research Laboratories.

Suitable amino carboxylate chelating agents useful herein include ethylene diamine tetra acetates, diethylene triamine pentaacetates, diethylene triamine pentaacetate (DTPA), N-hydroxyethylethylenediamine triacetates, nitrilotriacetates, ethylenediamine tetrapropionates, triethylenetetraaminehexaacetates, ethanoldiglycines, propylene diamine tetracetic acid (PDTA) and methyl glycine di-acetic acid (MGDA), both in their acid form, or in their alkali metal, ammonium, and substituted ammonium salt forms. Particularly suitable to be used herein are diethylene triamine penta acetic acid (DTPA), propylene diamine tetracetic acid (PDTA) which is, for instance, commercially available from BASF under the trade name Trilon FS® and methyl glycine di-acetic acid (MGDA).

Further carboxylate chelating agents to be used herein include malonic acid, salicylic acid, glycine, aspartic acid, glutamic acid, or mixtures thereof.

Said chelating agents, especially phosphonate chelating agents like diethylene triamine penta methylene phosphonates, are particularly preferred in the compositions according to the present invention as they have been found to further contribute to the disinfecting properties of the compositions herein.

Further chelating agents to be used herein include polymeric chelating agents, such as vinylpyrrolidone methacrylate copolymers, which are, for instance, commercially available from BASF under the trade name Luvitec VPMA 91W® .

Typically, the compositions according to the present invention comprise up to 5% by weight of the total composition of a chelating agent, or mixtures thereof, preferably from 0.002% to 3% by weight and more preferably from 0.002% to 1.5%.

### Radical scavengers

The compositions herein may further comprise a radical scavenger as a preferred optional ingredient. Suitable radical scavengers for use herein include the well-known substituted mono and di hydroxy benzenes and derivatives thereof, alkyl- and aryl carboxylates and mixtures thereof. Preferred radical scavengers for use herein include di-tert-butyl hydroxy toluene, hydroquinone, di-tert-butyl hydroquinone, mono-tert-butyl hydroquinone, tert-butyl-hydroxy anysole, benzoic acid, toluic acid, catechol, t-butyl catechol, 2-methoxy-phenol, 2-ethoxy-phenol, 4-allyl-catechol, 2-methoxy-4-(2-propenyl)phenol, benzylamine, 1,1,3-tris(2-methyl-4-hydroxy-5-t-butylphenyl) butane, as well as n-propyl-gallate. Highly preferred for use herein is di-tert-butyl hydroxy toluene, which is for example commercially available from SHELL under the trade name IONOL CP®.

Typically, the compositions according to the present invention comprise up to 5% by weight of the total composition of a radical scavenger, or mixtures thereof, preferably from 0.01% to 1.5% by weight and more preferably from 0.01% to 1%.

### Solvents

When used, solvents will, advantageously, give an enhanced cleaning and disinfecting performance to the composition. Suitable solvents for incorporation in the compositions according to the present invention include all those known to those skilled in the art of hard-surfaces cleaner compositions. For example, suitable solvents for use herein include ethers and diethers having from 4 to 14 carbon atoms, preferably from 6 to 12 carbon atoms, and more preferably from 8 to 10 carbon atoms, glycols or alkoxylated glycols, glycol ethers and/or derivatives, polyols, alkoxylated aromatic alcohols, aromatic alcohols, aliphatic branched or linear alcohols, alkoxylated aliphatic branched or linear alcohols, terpenes, and mixtures thereof.

Suitable glycols for use herein are according to the formula HO-CR₁R₂-OH wherein R₁ and R₂ are independently H or a C₂-C₁₂ saturated or unsaturated aliphatic hydrocarbon chain and/or cyclic. Suitable glycols to be used herein are dodecaneglycol, 1,2-hexanediol and/or propanediol.

Suitable alkoxylated glycols for use herein are according to the formula R-(A)ₙ-R₁-OH wherein R is H, OH, a linear saturated or unsaturated alkyl of from 1 to 20 carbon atoms, preferably from 2 to 15 and more preferably from 2 to 10, wherein R₁ is H or a linear saturated or unsaturated alkyl of from 1 to 20 carbon atoms, preferably from 2 to 15 and more preferably from 2 to 10, and A is an alkoxy group preferably ethoxy, methoxy, and/or propoxy and n is from 1 to 5, preferably 1 to 2. Suitable alkoxylated glycols to be used herein are methoxy octadecanol and/or ethoxyethoxyethanol.

Suitable glycol ethers and/or derivatives thereof for use herein include monoglycol ethers and/or derivatives thereof, di-, tri- and poly-glycol ethers and/or derivatives thereof and mixtures thereof.

Suitable monoglycol ethers and derivatives thereof for use herein include propylene glycol butyl ether, and water-soluble CELLOSOLVE® solvents or mixtures thereof. Preferred Cellosolve® solvents include 2-(Hexyloxy)ethanol (i.e., 2-hexyl Cellosolve®), ethylene glycol ethyl ether (i.e., 2-ethyl Cellosolve® ), ethylene glycol butyl ether (i.e., 2-butyl Cellosolve®) or mixtures thereof.

Suitable polyglycol ethers and derivatives thereof for use herein include n-butoxypropoxypropanol (n-BPP), butyl triglycol ether (BTGE), butyl diglycol ether (BDGE), diethylene glycol butyl ether, water-soluble CARBITOL® solvents or mixtures thereof.

Preferred water-soluble CARBITOL® solvents are compounds of the 2-(2-alkoxyethoxy)ethanol class, 2-(2-alkoxyethoxy)propanol class and/or 2-(2-alkoxyethoxy)butanol class wherein the alkoxy group is derived from ethyl, propyl, butyl and tert-butyl. A preferred water-soluble carbitol is 2-(2-butoxyethoxy)ethanol also known as butyl carbitol®.

Suitable polyols for use herein are aliphatic linear or branched saturated or unsaturated hydrocarbons having from 2 to 12 carbon atoms, preferably 4 to 10, and comprising at least 2 hydroxyl groups, preferably from 2 to 4. Suitable polyols herein are diols such as 2-ethyl-1,3-hexanediol, 2,2,4-trimethyl-1,3-pentanediol, methyl-2,4 pentanediol, 1,6-hexanediol or mixture thereof.

Suitable alkoxylated aromatic alcohols for use herein are according to the formula R (A)ₙ-OH wherein R is an alkyl substituted or non-alkyl substituted aryl group of from 1 to 20 carbon atoms, preferably from 2 to 15 and more preferably from 2 to 10, wherein A is an alkoxy group preferably butoxy, propoxy and/or ethoxy, and n is an integer of from 1 to 5, preferably 1 to 2. Suitable alkoxylated aromatic alcohols are benzoxyethanol and/or benzoxypropanol.

Suitable aromatic alcohols for use herein are according to the formula R-OH wherein R is an alkyl substituted or non-alkyl substituted aryl group of from 1 to 20 carbon atoms, preferably from 1 to 15 and more preferably from 1 to 10. For example a suitable aromatic alcohol to be used herein is benzyl alcohol.

Suitable aliphatic linear or branched alcohols for use herein are according to the formula R-OH wherein R is a branched or linear saturated or unsaturated alkyl group of from 1 to 20 carbon atoms, preferably from 2 to 15 and more preferably from 2 to 12. Particularly suitable aliphatic branched alcohols to be used herein include 2-ethylbutanol and/or 2-methylbutanol. Particularly suitable aliphatic linear alcohols to be used herein include decanol, ethanol and/or 1- or 2- propanol.

Suitable alkoxylated aliphatic linear or branched alcohols for use herein are according to the formula R-(A)ₙ-OH wherein R is a branched or linear saturated or unsaturated alkyl group of from 1 to 20 carbon atoms, preferably from 2 to 15 and more preferably from 5 to 12, wherein A is an alkoxy group preferably butoxy, propoxy and/or ethoxy, and n is an integer of from 1 to 5, preferably 1 to 2. Suitable alkoxylated aliphatic branched alcohols include 1-methylpropoxyethanol and/or 2-methylbutoxyethanol. Suitable alkoxylated aliphatic linear alcohols include ethoxy propanol and/or propoxy propanol.

Other suitable solvents include ter amilic alcohol, terpene solvents and the like.

Suitable terpenes for use herein are mono-and bicyclic terpenes, especially those of the hydrocarbon class, which include the terpinenes, terpinolenes and pinenes and mixtures thereof. Highly preferred materials of this type are dipentene, alpha-pinene and/or beta-pinene. For example, pinene is commercially available from SCM Glidco (Jacksonville) under the name Alpha Pinene P&F®.

Particularly preferred solvents for use herein are ethylene glycol butyl ether, propylene glycol butyl ether, diethylene glycol butyl ether, butoxy propoxy propanol, butyl diglycol ether, benzyl alcohol, butoxypropanol, 2-(2-butoxyethoxy) ethanol, ethanol, methanol, benzyl alcohol, isopropanol, 1-propanol and mixtures thereof.

Highly preferred solvent mixtures for use herein include :
- 2-(2-butoxyethoxy) (preferably at level of 0.1% to 5% by weight), butoxy propanol (preferably at level of 0.1% to 10% by weight), and benzyl alcohol (preferably at level of 0.1% to 2% by weight); or
- ethanol (preferably at level of 0.1% to 10% by weight), butoxy propanol (preferably at level of 0.1% to 10% by weight) and benzyl alcohol (preferably at level of 0.1% to 2% by weight); or
- ethanol (preferably at level of 0.1% to 10% by weight) and butoxy propanol (preferably at level of 0.1% to 10% by weight); or
- ethanol (preferably at level of 0.1% to 10% by weight) and 1-propanol (preferably at level of 0.1% to 10% by weight); or
- ethanol alone; or
- 1-propanol alone.

These solvent mixtures provide additional cleaning benefits in neat conditions and accelerate the evaporation time of the compositions comprising them, resulting in shorter cleaning time for the housewife.

Typically, the compositions of the present invention comprise up to 20% by weight of the total composition of a solvent or mixtures thereof, preferably from 0.5% to 10% by weight, more preferably from 1% to 8% and most preferably from 2% to 7% by weight of the composition.

### Peroxygen bleach

Another suitable additional component for use herein is a peroxygen bleach. Peroxygen bleach, especially hydrogen peroxide, persulfate and the like, in the compositions of the present invention advantageously contribute to the disinfection properties of said compositions. Hence, not to be bound by theory, it is believed that said peroxygen bleach may attack the vital function of the micro-organism cells, for example, it may inhibit the assembling of ribosomal units within the cytoplasm of the micro-organism cells. Also, said peroxygen bleach like hydrogen peroxide, is a strong oxidizer that generates hydroxyl free radicals which attack proteins and nucleic acids. Furthermore, the presence of said peroxygen bleach, especially hydrogen peroxide, provides strong stain removal benefits which are particularly noticeable for example in laundry and hard surfaces applications.

As used herein, a hydrogen peroxide source refers to any compound which produces hydrogen peroxide when said compound is in contact with water. Suitable water-soluble sources of hydrogen peroxide for use herein include percarbonates, persilicate, persulphate such as monopersulfate, perborates and peroxyacids such as diperoxydodecandioic acid (DPDA), magnesium perphthalic acid and mixtures thereof.

A preferred peroxygen bleach is hydrogen peroxide, or a water soluble source thereof, or mixtures thereof. A most preferred peroxygen bleach is hydrogen peroxide.

In addition to the peroxygen bleach, other classes of peroxides can be used as an alternative to hydrogen peroxide and sources thereof or in combination with hydrogen peroxide and sources thereof. Suitable classes include dialkylperoxides, diacylperoxides, preformed percarboxylic acids, organic and inorganic peroxides.

Typically, the compositions herein may comprise at least 0.01% by weight of the total composition of said peroxygen bleach or mixtures thereof, preferably from 0.1% to 15%, more preferably from 0.8% to 10% and most preferably 1% to 5%.

The compositions herein may further comprise a variety of other optional ingredients such builders, stabilisers, bleach activators, soil suspenders, dye transfer agents, brighteners, perfumes, anti dusting agents, enzymes, dispersant, dye transfer inhibitors, pigments, perfumes and dyes.

### Packaging form of the disinfecting compositions

The compositions herein may be packaged in a variety of suitable detergent packaging known to those skilled in the art.

In a preferred embodiment of the present invention, the liquid compositions herein are packaged in a plastic, preferably plastic, squeeze, container, preferably bottle.

Preferably, the disinfecting compositions herein in a liquid form may be packaged in manually operated spray dispensing containers. Accordingly, the present invention also encompasses liquid compositions of the invention packaged in a spray dispenser, preferably in a trigger spray dispenser or in a pump spray dispenser.

For example, said spray-type dispensers allow to uniformly apply to a relatively large area of a surface to be disinfected the liquid compositions suitable for use according to the present invention; thereby contributing to the disinfecting properties of said compositions. Such spray-type dispensers are particularly suitable to disinfect vertical surfaces.

Suitable spray-type dispensers to be used according to the present invention include manually operated foam trigger-type dispensers sold for example by Specialty Packaging Products, Inc. or Continental Sprayers, Inc. These types of dispensers are disclosed, for instance, in US-4,701,311 to Dunnining et al. and US-4,646,973 and US-4,538,745 both to Focarracci. Particularly preferred to be used herein are spray-type dispensers such as T 8500® or T8900® commercially available from Continental Sprayers International or T 8100® commercially available from Canyon, Northern Ireland. In such a dispenser the liquid composition is divided in fine liquid droplets resulting in a spray that is directed onto the surface to be treated. Indeed, in such a spray-type dispenser the composition contained in the body of said dispenser is directed through the spray-type dispenser head via energy communicated to a pumping mechanism by the user as said user activates said pumping mechanism. More particularly, in said spray-type dispenser head the composition is forced against an obstacle, e.g. a grid or a cone or the like, thereby providing shocks to help atomise the liquid composition, i.e. to help the formation of liquid droplets.

The compositions of the present invention may also be executed in the form of wipes. By "wipes", it is meant herein disposable towels incorporating a disinfecting composition according to the present invention. Preferably said wipes are packaged in a plastic box. Accordingly, the present invention also encompasses wipes, e.g., disposable towels, incorporating a composition as described herein before. Preferably said wipes are impregnated/wetted with a liquid disinfecting composition as described herein. The advantage of this execution is a faster usage of a disinfecting composition by the user, this even outside the house, i.e., there is no need for example to pour the liquid compositions according to the present invention on the surfaces to be disinfected and to dry it out with a cloth. In other words, wipes allow disinfecting of surfaces in one step.

### Examples

The following examples will further illustrate the present invention. The compositions are made by combining the listed ingredients in the listed proportions (weight % unless otherwise specified). The following Examples are meant to exemplify compositions used in a process according to the present invention but are not necessarily used to limit or otherwise define the scope of the present invention. Furthermore, the compositions I to L are comparative example compositions. Preferably, the immediate and long lasting disinfecting performance or anti-microbial activity of the Example compositions described herein below can be assessed with the tests methods described in the sections titled : *Immediate disinfecting test method* and *Long lasting disinfecting test method* herein above.

| **Ingredients** | **A** | **B** | **C** | **D** | **E** | **F** |
|---|---|---|---|---|---|---|
| | (% w/w) | (% w/w) | (% w/w) | (% w/w) | (% w/w) | (% w/w) |
| Water | to balance | to balance | to balance | to balance | to balance | to balance |
| Thymol | 0.025 | --- | --- | --- | --- | 0.01 |
| Geraniol | 0.0375 | 0.09 | 0.3 | --- | --- | --- |
| Cinnamon oil | --- | 0.1 | --- | --- | 0.2 | --- |
| Cinnamyl aldehyde | --- | --- | 0.15 | 0.2 | --- | 0.1 |
| Vantocil IB® | 0.2 | 0.3 | 0.5 | --- | 0.5 | --- |
| Chlrohexidine® | --- | --- | --- | 0.03 | --- | 0.04 |
| Perfume | 0.0375 | 0.1 | 0.1 | 0.1 | 0.1 | 0.15 |
| Ethanol | 9.4 | 9.4 | 5.0 | 9.4 | 8.0 | 8.0 |
| Silicone Dow AF | --- | 0.003 | --- | 0.003 | 0.003 | 0.003 |
| C₁₂₋₁₄ amine oxide | --- | 0.2 | 0.2 | --- | 0.1 | --- |
| C₁₀ amine oxide | --- | --- | --- | 0.2 | --- | 0.02 |
| C₉₋₁₀ EO10 | 1.0 | 0.2 | --- | 0.8 | 0.1 | --- |
| C₉₋₁₁ EO5 | --- | --- | --- | --- | --- | 0.1 |
| C₁₂₋₁₄ Betaine sodium salt | 0.25 | --- | --- | --- | --- | --- |
| 2-Ethyl-Hexyl- | 0.75 | 0.1 | 0.1 | 0.15 | 0.05 | 0.05 |
| Sulphate | | | | | | |
| Citric acid | 1.5 | 0.75 | 1.5 | 1.0 | --- | --- |
| Lactic acid | --- | --- | --- | --- | 0.44 | 1.0 |
| Na₂CO₃ | --- | 0.1 | --- | --- | 0.06 | --- |
| NaOH | --- | 0.45 | --- | --- | 0.2 | --- |
| pH | 2.4 | 9.5 | 2.8 | 2.8 | 9.5 | 7.1 |

| **Ingredients** | **G** | **H** | **I** | **J** | **K** | **L** |
|---|---|---|---|---|---|---|
| | (% w/w) | (% w/w) | (% w/w) | (% w/w) | (% w/w) | (% w/w) |
| Water | to | to | to | to | to | to |
| | balance | balance | balance | balance | balance | balance |
| Cinnamon oil | --- | --- | --- | --- | --- | --- |
| Cinnamyl aldehyde | --- | --- | --- | --- | --- | --- |
| Thymol | 0.025 | 0.01 | --- | --- | --- | --- |
| Geraniol | 0.0375 | --- | --- | 0.3 | --- | ----- |
| Vantocil IB® | --- | 0.1 | --- | --- | 0.2 | --- |
| Chlrohexidine® | 0.03 | 0.05 | --- | --- | --- | --- |
| Perfume | 0.0375 | 0.1 | 0.1 | 0.1 | 0.1 | 0.15 |
| Ethanol | 9.4 | 9.4 | 5.0 | 9.4 | 8.0 | 8.0 |
| Silicone Dow AF | --- | 0.003 | --- | 0.003 | 0.003 | 0.003 |
| C₁₂₋₁₄ amine oxide | --- | 0.2 | 0.2 | --- | 0.1 | --- |
| C₁₀ amine oxide | --- | --- | --- | 0.2 | --- | 0.02 |
| C₉₋₁₀ EO10 | 1.0 | 0.2 | --- | 0.8 | 0.1 | --- |
| C₉₋₁₁ EO5 | --- | --- | --- | --- | --- | 0.1 |
| C₁₂₋₁₄ Betaine | 0.25 | --- | --- | --- | --- | --- |
| sodium salt | | | | | | |
| 2-Ethyl-Hexyl-Sulphate | 0.75 | 0.1 | 0.1 | 0.15 | 0.05 | 0.05 |
| Citric acid | 1.5 | 0.75 | 1.5 | --- | --- | --- |
| Lactic acid | --- | --- | --- | --- | --- | --- |
| Na₂CO₃ | --- | 0.1 | --- | --- | 0.06 | --- |
| NaOH | --- | 0.45 | --- | --- | 0.2 | --- |
| pH | 2.4 | 9.5 | 2.8 | 2.8 | 9.5 | 7.1 |

Vantocil IB® is poly (hexamethylene biguanide) hydrochloride commercially available form Avecia.

Chlrohexidine® is 1,1'-hexamethylene-bis-[5-(p-chlorphenyl)-biguanide] commercially available from Sigma.

## Claims

1. A process of disinfecting and/or cleaning a hard-surface with a composition comprising a biguanide antimicrobial agent, an essential oil or an active thereof and an organic acid or a salt thereof.

2. A process according to claim 1, wherein said composition is a liquid composition having a pH from 4 to 14.

3. A process according to any of the preceding claims, wherein said biguanide antimicrobial agent is an oligo- or poly-alkylene biguanide or a salt thereof or a mixture thereof.

4. A process according to claim 3, wherein said biguanide antimicrobial agent is an oligo- or poly-hexamethylene biguanide or a salt thereof or a mixture thereof.

5. A process according to any of claims 3 or 4, wherein said biguanide antimicrobial agent is poly (hexamethylene biguanide) hydrochloride.

6. A process according to any of claims 1 or 2, wherein said biguanide antimicrobial agent is 1,1'-hexamethylene-bis-[5-(p-chlorphenyl)-biguanide].

7. A process according to any of the preceding claims, wherein said composition comprises up to 20% by weight of the total composition of said biguanide antimicrobial agent.

8. A process according to any of the preceding claims, wherein said essential oil or an active thereof is
a) selected from the group consisting of oils obtained from thyme, lemongrass, citrus, lemons, oranges, anise, clove, aniseed, cinnamon, geranium, roses, mint, lavender, citronella, eucalyptus, peppermint, camphor, sandalwood, pine, vervain, rosmarin, fleagrass, ratanhiae and cedar and mixtures thereof; and/or
b) selected from the group of actives of essential oils consisting of thymol, eugenol, menthol, geraniol, verbenone, eucalyptol, pinocarvone, cedrol, anethol, cinnamic acid, cinnamyl aldehyde, cinnamyl alcohol, carvacrol, hinokitiol, berberine, ferulic acid, methyl salicylic acid, methyl salicylate and terpineol and mixtures thereof.

9. A process according to any of the preceding claims, wherein said composition comprises up to 20% by weight of the total composition of said essential oil or an active thereof.

10. A process according to any of the preceding claims, wherein said organic acid or salt thereof is selected from the group consisting of mono- and poly-carboxylic acids, percarboxylic acids and substituted carboxylic acids, and salts thereof, and mixtures thereof.

11. A process according to any of the preceding claims, wherein said composition comprises up to 20% by weight of the total composition of said organic acid or a salt thereof.

12. A process according to any of the preceding claims, wherein said composition further comprises an additional ingredient selected from the group consisting of solvents, surfactants, peroxygen bleaches, radical scavengers and chelating agents and mixtures thereof.

13. A process according to any of the of the preceding claims, wherein said composition is incorporated onto a wet wipe.

14. The use of a biguanide antimicrobial agent, an essential oil or an active thereof and an organic acid or a salt thereof in a composition to disinfect a hard-surface whereby immediate and/or long lasting disinfecting benefits are provided.
